Europäisches Patentamt

European Patent Office

Office européen des brevets

(19)

(11) Veröffentlichungsnummer : **0 462 413 B1**

(12) **EUROPÄISCHE PATENTSCHRIFT**

(45) Veröffentlichungstag der Patentschrift :
29.03.95 Patentblatt 95/13

(51) Int. Cl.⁶ : **G01N 15/06**

(21) Anmeldenummer : **91108336.8**

(22) Anmeldetag : **23.05.91**

(54) **Kondensationskernzähler.**

(30) Priorität : **20.06.90 DE 4019676**

(43) Veröffentlichungstag der Anmeldung :
**27.12.91 Patentblatt 91/52**

(45) Bekanntmachung des Hinweises auf die
Patenterteilung :
**29.03.95 Patentblatt 95/13**

(84) Benannte Vertragsstaaten :
**AT DE FR GB IT**

(56) Entgegenhaltungen :
**WO-A-89/08245**
**DE-U- 7 321 827**
**US-A- 4 790 650**
**SOLID STATE TECHNOLOGY September 1985,**
**Seiten 139-148; R.P. DONOVAN et al.: "Real**
**Time Measurements of Single Submicron Ae-**
**rosol Particles in Clean Rooms"**

(56) Entgegenhaltungen :
**SOLID STATE TECHNOLOGY Band 33, Nr. 9,**
**September1990, Seiten 113-117; E.M. JOHN-**
**SON et al.: "An Automated CNC Based Filter**
**Tester for Fast Penetration Testing of HEPA**
**and ULPA Media"**

(73) Patentinhaber :
**FRAUNHOFER-GESELLSCHAFT ZUR**
**FÖRDERUNG DER ANGEWANDTEN**
**FORSCHUNG E.V.**
**Leonrodstrasse 54**
**D-80636 München (DE)**

(72) Erfinder : **Holländer, Werner**
**Wallstrasse 29**
**W-3100 Celle (DE)**
Erfinder : **Dunkhorst, Wilhelm, Dipl.-Ing.**
**Loccumer Strasse 20**
**W-4953 Patershagen (DE)**
Erfinder : **Lödding, Hubert, Dipl.-Ing.**
**Am Sülterberg 19**
**W-3160 Lehrte (DE)**

**Beschreibung**

Die Erfindung betrifft einen Kondensationskernzähler und seine Verwendung.

Das Bedürfnis zum Nachweis von Partikeln in Gasen mit einem Durchmesser von < 0,1 mm wächst mit den hohen Anforderungen der modernen Reinraumtechnik ständig. Das einzige Verfahren, daß den Nachweis von Partikeln bereits im Nanometerbereich zuläßt, besteht darin, daß die Partikel durch Kondensation von Dampf soweit vergrößert werden, daß sie auf andere z. B. optische Weise gemessen werden können.

Ein typisches Gerät dieser Art ist der Kondensationskernzähler Modell 3760 der Firma Thermo System INC, Minnesota; Minneapolis (siehe etwa US-A-4 790 650). Dieser Kernzähler besteht aus einer Befeuchterzone sowie aus einer Kondensationszone, wobei die Kondensationszone rechtwinklig zur Verdampferzone angeordnet ist. Durch die Befeuchtungszone und Kondensationszone führt ein Kanal, durch den die Probenluft geführt wird. Die Befeuchtung der Probenluft in der Kondensationszone erfolgt dadurch, daß die Probenluft über ein Befeuchtungsbad mit der Betriebsflüssigkeit geführt wird. Um einen relativ hohen Volumenstrom zu erreichen, sieht der Kernzähler des Standes der Technik ein Röhrensystem vor, das den Volumenstrom in gleiche Teilströme aufteilt. Der hierdurch erreichte Volumenstrom beträgt 1,4 ltr./min.

Die WO-A-8908245 offenbart einen Kondensationskernzähler, der eine Vielzahl von Meßkanälen aufweist, die durch eine gemeinsame Befeuchtungszone führen. Die Kondensationszone wird in diesem Gerät durch ein die Zone serpentinenartig umfließendes Kühlmittel gekühlt.

Aus der DE-GM 73 21 827 ist bereits ein Kernzähler bekannt, der eine Befeuchtungszone aus einem durchlässigen Material aufweist.

Nachteilig bei dem Kernzähler der Firma Thermo Systeme ist, daß er trotz aufwendiger konstruktiver Maßnahmen nur einen Volumenstrom von 1,4 ltr. pro Minute aufnehmen kann. Ein derartiger Volumenstrom ist für Messungen, wie sie heute in der modernen Reinraumtechnik gefordert werden, zu gering. Nachteilig ist weiterhin, daß bedingt durch das Röhrensystem Dichtprobleme auftreten und auch ein Verlust von Partikeln möglich ist.

Weiter ungünstig ist wie beim Kernzähler nach der DE-GM 73 21 827, daß bei multiplen Messungen, d. h. wenn an mehreren Meßstellen gleichzeitig Messungen vorgenommen werden sollen, jeweils einzelne Geräte, d. h. einzelne Kernzähler mit der gesamten notwendigen Peripherie benötigt werden. Dadurch entsteht ein großer apparativer und finanzieller Aufwand.

Der Erfindung liegt daher die Aufgabe zugrunde, einen Kernzähler anzugeben, der es ermöglicht, größere Volumenströme zu messen und gleichzeitig an verschiedenen Stellen mit einem relativ geringen apparativen Aufwand eine Messung durchzuführen.

Die Aufgabe wird durch eine Vorrichtung mit den Merkmalen des Patentanspruchs 1 gelöst.

Besonders vorteilhaft ist es, wenn der Kanal der Befeuchtungszone einen ringförmigen Querschnitt aufweist. Der ringförmige Querschnitt ist allerdings nur eine bevorzugte Variante. Andere Formen, wie elliptische oder auch rechteckige, sind für den erfindungsgemäßen Kernzähler ebenso geeignet. Vorteilhaft ist, daß das durchlässige Material eine poröse Struktur aufweist, wie Sinterkörper, Schäume, Vliese oder dergleichen. Besonders bevorzugt ist ein Sintermaterial mit einer Wandstärke von 3 - 15 mm, wobei die Ausführung mit der Wandstärke von 3 - 8 mm bevorzugt ist. Dieser Kanal aus dem durchlässigen Material dient dann zur aerodynamischen Trennung der einzelnen Aerosolströme. Dieser Kanal taucht in die Betriebsflüssigkeit ein, wobei die Flüssigkeit durch Kapillarkräfte durch das poröse Material hindurchtritt und so für einen permanenten Flüssigkeitsnachschub sorgt. Die Verluste der Betriebsflüssigkeit werden durch Zufuhr von außen ausgeglichen. Andererseits muß das poröse Material so feinkörnig sein, daß trotz des von außen bestehenden hydrostatischen Überdrucks kein Vollaufen des Befeuchterkanals erfolgt. Die Dicke der Wandstärke richte sich demnach je nach dem Material und beträgt im allgemeinen zwischen 2 und 15 mm. Bevorzugt ist sie zwischen 3 - 8 mm. Die geometrische Dimensionierung der Befeuchtungszone muß dabei so erfolgen, daß eine vollständige Befeuchtung des Aerosolstroms sichergestellt ist. Dies ist dann gegeben, wenn der dimensionslose Parameter A aus $\dfrac{D \times T}{a^2}$ im Bereich etwa zwischen 0,5 und 1,5 liegt. Bevorzugt ist, wenn der Parameter die Größenordnung 1 erreicht. D ist dabei der Diffusionskoeffizient des Betriebsdampfers im Trägergas, T die Aufenthaltszeit des Aerosolvolumens im Befeuchter und a eine typische Dimension des Befeuchters quer zur Strömungsrichtung, also z. B. bei einem kreisförmigen Rohr der Rohrradius. In gleicher Weise wird auch die Kondensationszone ausgebildet. Die Dimensionierung des Kondensors erfolgt in analoger Weise, wobei nunmehr aber an Stelle des Betriebsdampf-Diffusionskoeffizienten die Temperaturleitzahl des Trägergases (K) einzusetzen ist und der Zahlenwert des Parameters B sich im Größenbereich zwischen 0,05 und 0,4 bewegt, damit den Kondensationskernen genügend Zeit verbleibt, um zu hinreichend großen Tröpfchen anwachsen zu können, und nicht zuviel Dampf an der Wand kondensiert. Bevorzugt soll B zwischen 0,1 und 0,3 liegen.

Vorzugsweise ist der Kanal der Kondensationszone besonders ausgebildet. Besonders vorteilhaft ist es dabei, ein Rohr von kreisförmigem Querschnitt zu verwenden, wobei das Rohr im Anschluß an den Übergangsbereich, von Verbindungsstück ausgehend, zum Übergangsbereich zum Adapter hin verjüngt ist. Im einfachsten Fall kann dies zum Zusammendrücken eines Rohres, wie z. B. eines Kupferrohres, erfolgen. Das Rohr hat dann bevorzugt einen elliptischen Querschnitt. Durch diese Ausbildung des Kondensationskanals wird ein optimales Anwachsen der Tröpfchen erreicht. Weiter vorteilhaft ist, daß die Optik mit dem Kanal der Kondensationszone durch einen Adapter verbunden ist, der so ausgestaltet ist, daß die angewachsenen Partikel ohne Verluste der Optik zugeführt werden. Vorzugsweise hat der Adapter eine konische Struktur.

Um einen konstanten Volumenstrom zu gewährleisten, wird das Probengas mit einer Pumpe, der eine kritische Düse vorgeschaltet ist, durchgesaugt.

Erfindungsgemäß ist vorgesehen, daß mehrere einzelne Meßkanäle zu einer Kernzählereinheit zusammengefaßt werden. Dies wird dadurch realisiert, daß für alle Kanäle sowohl der Befeuchtungszone wie auch der Kondensationszone nur ein einziges Betriebsbad bzw. eine einzige Kühleinrichtung vorgesehen ist. Das Gehäuse der Befeuchtungszone umgibt damit nicht nur einen einzigen Meßkanal, sondern alle Meßkanäle einer Meßeinheit. Genauso umgibt das Gehäuse der Kondensationszone sämtliche Kanäle der Kühlzone. Durch diese vorteilhafte Ausgestaltung ist nun noch jeweils nur ein Heizbad sowie eine Kühleinrichtung für die gesamte Meßeinheit notwendig. Genauso ist für das ganze System nur eine einzige Pumpe nötig. Dadurch wird der Betriebs- und konstruktive Aufwand in drastischer Weise gesenkt und gleichzeitig werden multiple Messungen ermöglicht.

Die Erfindung wird anhand der Figuren näher erläutert.

Figur 1      zeigt dabei das Funktionsprinzip des Kondensationskernzählers

Figur 2      zeigt am Beispiel einer ortsaufgelösten Penetrationsmessung an Filtertaschen die multiple Anwendung gemäß der Erfindung

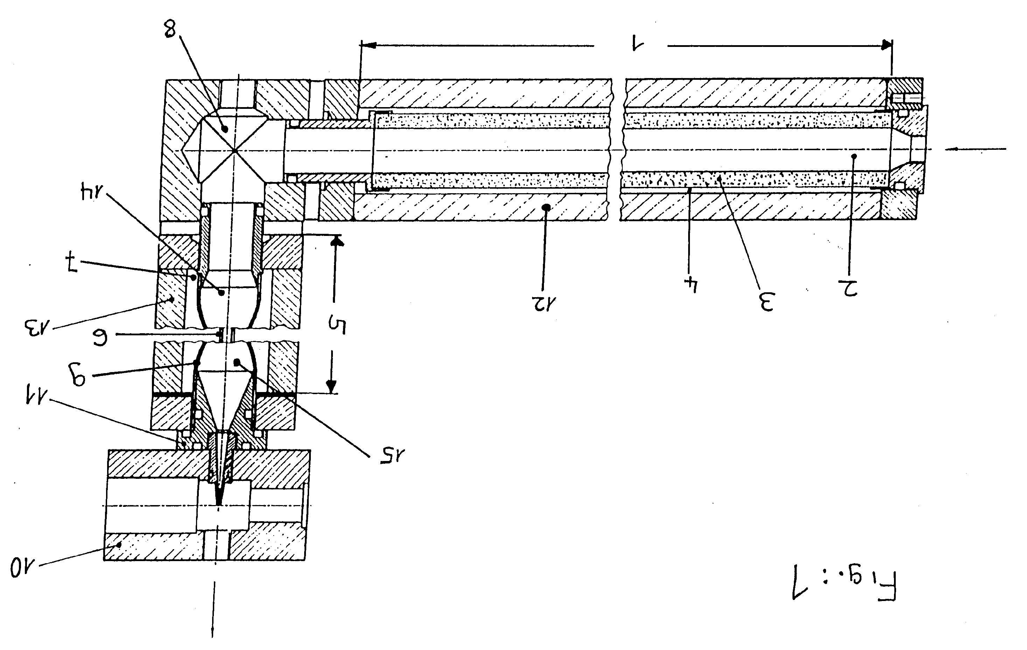

Das Funktionsprinzip des erfindungsgemäßen Kernzählers zeigt Figur 1.

Der partikelhaltige Gasstrom tritt dabei in den Kanal (2) der Befeuchtungszone (1) ein. Der Kanal (2) der Befeuchtungszone (1) ist dabei konstruktiv so gestaltet, daß zwar einerseits die Partikel nicht durch Diffusion verloren gehen, andererseits aber der Trägergas-Strom bei der Sättigertemperatur mit dem Betriebsdampf gesättigt wird. Dies wird dadurch erreicht, daß der Kanal (2) der Befeuchtungszone (1) eine poröse Struktur (3) aufweist, die für die jeweilige Betriebsflüssigkeit eine hinreichende Permeabilität besitzt. In dem Hohlraum (4) befindet sich dann die Betriebsflüssigkeit, die dann durch Kapillarkräfte in das Innere des Befeuchtungskanales (2) tritt. Der Hohlraum (4), in dem sich die Betriebsflüssigkeit befindet, ist von einem Gehäuse (12) umgeben. Dieses Gehäuse kann z.B. aus Aluminium gefertigt sein. Die geometrische Dimensionierung der Befeuchtungszone muß dabei so erfolgen, daß der dimensionslose Parameter $\dfrac{D \times T}{a^2}$ im Bereich zwischen 0,5 - 1,5 liegt.

Wenn diese Voraussetzung gegeben ist, wird eine vollständige Befeuchtung des Aerosolstroms sichergestellt. D ist dabei der Diffusionskoeffizient des Betriebsdampfes im Trägergas, T die Aufenthaltszeit des Aerosolvolumens im Befeuchter und a eine typische Dimension des Befeuchters quer zum Strom und zur Strömungsrichtung, also z. B. bei einem kreisförmigen Rohr der Rohrradius ist. Durch diese Ausgestaltung ist es nun möglich, daß je nach der Dimensionierung des Rohres unterschiedlich große Volumenströme von Probenluft angesaugt werden können. Diese vollständig gesättigte Probenluft wird dann über das Verbindungsstück (8) umgelenkt und in die Kondensationszone geführt. Besonders vorteilhaft ist dabei, daß zwischen der Befeuchtungszone (1) und dem Verbindungsstück (8) keine Dichtprobleme auftreten, wenn die Befeuchtungszone (1) mit dem Verbindungsstück (8) über einen Teflon-O-Ring verbunden wird. Genauso verhält es sich mit der Verbindung zwischen dem Verbindungsstück (8) und der Kondensationszone (5). Das gesättigte Gas tritt dann in die Kondensationszone (5) ein und wird dabei abgekühlt, so daß eine starke Übersättigung erzeugt wird, weil der Sättigungsdampfdruck mit sinkender Temperatur stark abnimmt, der aktuelle Dampfpartikeldruck aber noch dem hohen Sättigungsdampfdruck im Sättiger entspricht. Die Dimensionierung der Kondensationszone wird dabei so gewählt, daß der Parameter B im Größenbereich zwischen 0,05 und 0,4 liegt. Die Partikel wachsen hierdurch hinreichend an um auf optischen Wege in der nachfolgenden Detektionskammer gezählt zu werden. Die Abkühlung wird dabei dadurch erreicht, daß ein Kühlmittel durch den Hohlraum (7) der Kondensationszone (5) im Kreislauf geführt wird. Der Hohlraum (7) der Kondensationszone (5) ist dabei wiederum von einem Gehäuse (13) umgeben. Der Volumenstrom mit den angewachsenen Partikeln wird nun über den Adapter (11) zur Optik geführt. Der Adapter (11) ist dabei so ausgestaltet, daß keine Verluste beim Übergang auftreten. Dies wird dadurch erreicht, daß er konisch ausgebildet ist. Die Partikel werden dann in einer üblichen optischen Einrichtung, die aus einem Laser und einem Fotodetektor bestehen kann, gezählt. Der Volumenstrom des Probengases wird während des ganzen Messvorganges auf eine geeignete Größe durch eine, sich an das Gerät anschließende Pumpe, eingestellt. Als vorteilhaft hat es sich hierbei herausgestellt, wenn der Pumpe eine kritische Düse vorgeschaltet wird.

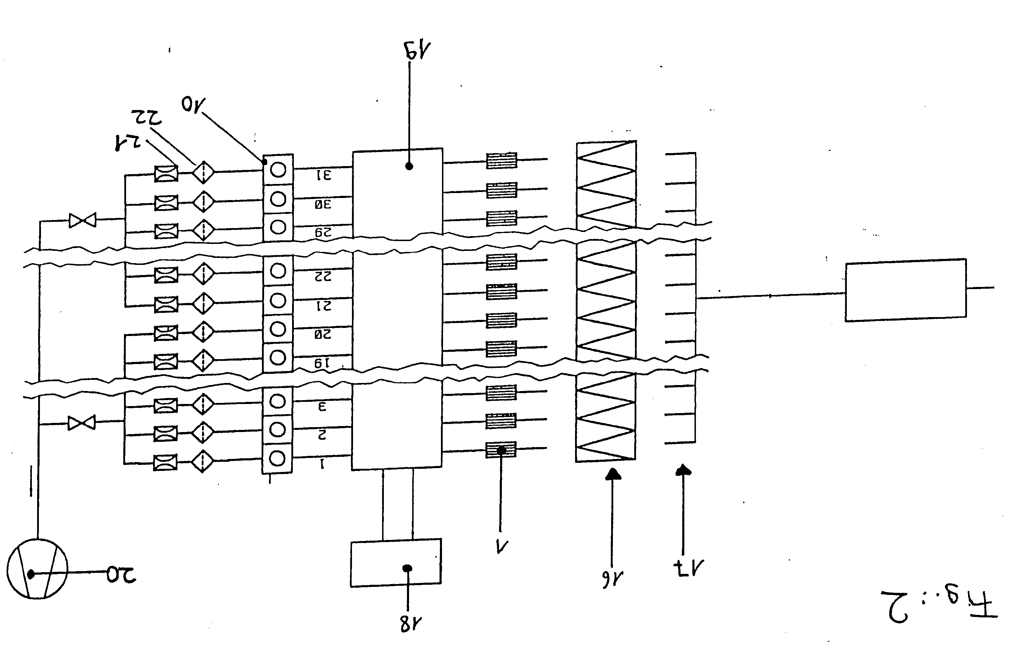

Figur 2 zeigt die ortsaufgelöste Penetrationsmessung an Filtertaschen als Beispiel für eine multiple Messung. Alle Kondensationszähler des Standes der Technik sind bezüglich ihrer Einzelteile völlig diskret aufgebaut, d. h. jeder Kernzähler verfügt über eine eigene Befeuchtungszone, ein eigenes Sättiger-Temperaturbad, eine eigene Kondensationszone mit separater Kühlung, separater Optik und einzelnen Pumpen. Es läßt sich dies mit dem beanspruchten Kernzähler vermeiden, da durch den Aufbau des Kernzählers es nun möglich ist, alle Kanäle der Befeuchtungszone, da sie aus porösem Material sind, von einem einzigen Verdampfungsbad zu umgeben. Figur 2 zeigt eine solche Meßanordnung für eine ortsaufgelöste Pentrationsmessung an Filtertaschen. In diesem Beispiel sollen die Filter (16) auf ihre Durchlässigkeit geprüft werden. Dazu werden alle Filter (16) gleichmäßig über ein Verteilersystem (17) mit einem Prüfaerosol beaufschlagt. Den jeweiligen einzelnen Filtern ist dann immer eine Befeuchtungszone (1) nachgeschaltet. Für diese z. B. 31 Befeuchter ist lediglich ein einziges Befeuchterbad und damit auch nur eine Verdampfungseinheit notwendig. Die einzelnen geteilten Volumenströme werden dann der Kondensationszone zugeführt, wobei diese Kondensationszone nur von einem einzigen Kühlbad (19) versorgt wird, das über einen Thermostaten (18) geregelt wird. Im vorliegenden Beispielsfall hat jeder einzelne Kernzähler ein eigenes optisches System (10), bestehend aus Lichtquelle und Detektor. Es ist aber genausogut möglich für sämtliche Einzelmessungen nur eine einzige Lichtquelle zur Verfügung zu stellen. Der Volumenstrom wird über eine Pumpe (20) und kritische Düsen (21) sowie Filter (22) gesteuert. Damit können mit einer derartigen Kernzähleinheit die unterschiedlichsten multiplen Messungen durchgeführt werden. Die Anzahl der einzelnen Kernzähler kann an die jeweilige Aufgabenstellung angepaßt werden. Genauso kann durch entsprechende Auslegung des Kanalquerschnitts der Volumenstrom angepaßt werden.

Mit dem erfindungsgemäßen Kernzähler steht damit ein Kernzähler zur Verfügung, der ohne großen Aufwand an das jeweilige Problem angepaßt werden kann.

## Patentansprüche

1. Kondensationskernzähler mit einer Befeuchtungszone aus einem Kanal, durch die die Probenluft geführt wird, und einer annähernd senkrecht dazu angeordneten Kondensationszone sowie einem optischen Detektionssystem, bestehend aus einer Lichtquelle und einem Detektor, wobei vorgesehen ist,
daß der Kanal (2) der Befeuchtungszone (1), der aus durchlässigem Material (3), welches eine für die jeweilige Befeuchtungsflüssigkeit hinreichende Permeabilität aufweist, besteht, von einem Hohlraum (4) umgeben ist, der zur Aufnahme der Befeuchtungsflüssigkeit dient,
daß dieser Kanal in die Betriebsflüssigkeit eintaucht, wobei die Flüssigkeit durch Kapillarkräfte durch das poröse Material hindurchtritt und so für einen permanenten Flüssigkeitsnachschub sorgt, aber andererseits das poröse Material so feinporig ist, daß trotz des von außen bestehenden hydrostatischen Überdrucks kein Vollaufen des Befeuchtungskanals erfolgt,
daß die Kondensationszone (5) aus einem Kanal (6) besteht, der von einem Hohlraum (7) umgeben ist, der zur Aufnahme eines Kühlmittels, das im Kreislauf durch den Hohlraum (7) der Kondensationszone (5) geführt wird, dient, wobei die Kondensationszone (5) über ein Verbindungsstück (8) mit der Befeuchtungszone (1) verbunden ist,
daß sowohl der Hohlraum (4) der Befeuchtungszone (1) wie auch der Hohlraum (7) der Kondensationszone (5) von einem Gehäuse (12, 13) umgeben ist und
daß mindestens 2 einzelne Meßkanäle, wobei jeder einen Kanal (2) der Befeuchtungszone (1), der über das Verbindungsstück (8) mit dem Kanal (6) der Kondensationszone (5) verbunden ist, aufweist, zu einer Kernzählereinheit angeordnet sind.

2. Kernzähler nach Anspruch 1,
**dadurch gekennzeichnet,**
daß der Kanal (2) der Befeuchtungszone (1) einen ringförmigen Querschnitt aufweist.

3. Kernzähler nach Anspruch1 und 2,
**dadurch gekennzeichnet,**
daß das durchlässige Material (3) eine poröse Struktur wie Sintermaterial aufweist und eine Wandstärke von 3 bis 15 mm hat.

4. Kernzähler nach Anspruch 3,
**dadurch gekennzeichnet,**
daß die Wandstärke des Sintermaterials 3 bis 8 mm ist.

5. Kernzähler nach Anspruch 1 bis 4,
**dadurch gekennzeichnet,**
daß die Befeuchtungsflüssigkeit ausgewählt ist aus der Gruppe der Perfluoralkane oder höheren Alkohole.

6. Kernzähler nach Anspruch 5,
**dadurch gekennzeichnet,**
daß die Befeuchtungsflüssigkeit n-Butanol ist.

7. Kernzähler nach Anspruch 1 bis 6,
**dadurch gekennzeichnet,**
daß die Befeuchtungsflüssigkeit über eine externe Zuführung ergänzt werden kann.

8. Kernzähler nach Anspruch 1 bis 7,
**dadurch gekennzeichnet,**
daß die geometrische Dimensionierung des Kanals (2) der Befeuchtungszone (1) so gewählt wird, daß der dimensionslose Parameter A, der sich aus der Beziehung $\frac{D x T}{a^2}$ ergibt, im Bereich von etwa 0,5 bis 1,5 liegt, wobei D der Diffusionskoeffizient des Betriebsdampfes im Trägergas, T die Aufenthaltszeit des Aerosolvolumens im Befeuchter und a eine typische Dimension des Befeuchters quer zur Strömungsrichtung, wie z.B. der Rohrradius bei einem kreisförmigen Rohr, ist.

9. Kernzähler nach Anspruch 1 bis 8,
**dadurch gekennzeichnet,**
daß der Parameter A bevorzugt die Größenordnung 1 erreicht.

10. Kernzähler nach Anspruch 9,
**dadurch gekennzeichnet,**
daß der Durchmesser des Kanals (2) der Befeuchtungszone (1) so ausgelegt ist, daß ein Volumenstrom von bis zu 6l pro Minute Probenluft aufgenommen werden kann.

11. Kernzähler nach Anspruch 9,
**dadurch gekennzeichnet,**
daß der Durchmesser des Kanals (2) der Befeuchtungszone (1) so ausgelegt ist, daß bevorzugt bis zu 3l pro Minute Probenluft aufgenommen werden kann.

12. Kernzähler nach Anspruch 1 bis 11,
**dadurch gekennzeichnet,**
daß der Kanal (6) der Kondensationszone (5) aus einem Rohr (9) besteht, wobei das Rohr (9) im Anschluß an einen vom Verbindungsstück (8) ausgehenden Übergangsbereich (14) bis zu einem weiteren Übergangsbereich (15) hin verjüngt ist.

13. Kernzähler nach Anspruch 1 bis 12,
**dadurch gekennzeichnet,**
daß die geometrische Dimensionierung des Kanals (6) der Kondensationszone (5) so gewählt wird, daß der dimensionslose Parameter B, der sich aus der Beziehung $\frac{K x T}{a^2}$ ergibt, im Größenbereich zwischen 0,05 und 0,4 liegt, wobei die Symbole T und a die gleiche Bedeutung wie in Anspruch 8 angegeben, aufweisen und K die Temperaturleitzahl des Trägergases ist.

14. Kernzähler nach Anspruch 1 bis 13,
**dadurch gekennzeichnet,**
daß das optische Detektionssystem (10) mit dem Kanal (6) der Kondensationszone (5) durch einen Adapter (11) verbunden ist.

15. Kernzähler nach einem oder mehreren der Ansprüche 1 bis 14,
**dadurch gekennzeichnet,**
daß der Hohlraum (4) der Befeuchtungszonen (1) sowie der Hohlraum (7) der Kondensationszonen (5) der Kernzählereinheit jeweils von einem einzigen Gehäuse umgeben sind.

5

**16.** Kernzähler nach Anspruch 15,
**dadurch gekennzeichnet,**
daß jeder einzelne Meßkanal über ein eigenes optisches Detektionssystem aus Lichtquelle und Detektor verfügt.

**17.** Kernzähler nach Anspruch 15,
**dadurch gekennzeichnet,**
daß alle Meßkanäle mit einer einzigen Lichtquelle verbunden sind.

**18.** Kernzähler nach Anspruch 15 bis 17,
**dadurch gekennzeichnet,**
daß alle Meßkanäle mit einer einzigen Pumpe (20) zur Steuerung des Volumenstroms verbunden sind.

**19.** Kernzähler nach Anspruch 18,
**dadurch gekennzeichnet,**
daß der Pumpe (20) eine kritische Düse (21) zur Stabilisierung des Volumenstroms vorgeschaltet ist.

**20.** Verwendung des Kernzählers nach Anspruch 15 bis 19, zur ortsauflösenden Messung der Penetration an Filtertaschen oder zur ortsauflösenden Messung in Reinräumen.

## Claims

**1.** Condensation nucleus counter with a humidification zone comprising a duct through which the test air is passed, and a condensation zone disposed approximately perpendicularly therewith, and with an optical detection system, comprising a light source and a detector a duct (2) of the humidification zone (1) which consists of permeable material (3) which has a permeability sufficient for the respective humidification liquid, beung surrounded by a hollow space (4) which serves to receive the humidification liquid, this duct dipping into the operational liquid, the liquid penetrating by capillary action through the porous material and thus ensuring a permanent liquid feed, but on the other hand the porous material being of such find porosity that, despite the excess hydrostatic pressure obtaining from the exterior, no full running of the humidification duct results, the condensation zone (5) comprising a duct (6) which is surrounded by a hollow space (7) which serves to receive the coolant, which circulates through the hollow space (7) of the condensation zone (5) said condensation zone (5) being connected by a connector piece (8) to the humidification zone (1), both the hollow space (4) of the humidification zone (1) and also the hollow space (7) of the condensation zone (5) being surrounded by a casing (12, 13), and at least two individual measuring ducts, each having a duct (2) of the humidification zone (1) which is connected by the connector piece (8) with the duct (6) of the condensation zone (5), being combined to form a nucleus counter unit.

**2.** Nucleus counter according to Claim 1 characterised in that the duct (2) of the humidification zone (1) has an annular cross-section.

**3.** Nucleus counter according to Claim 1 and 2, characterised in that the permeable material (3) has a porous structure like sintered material, and has a wall thickness of 3-15mm.

**4.** Nucleus counter according to Claim 3, characterised in that the wall thickness of the sintered material is 3-8mm.

**5.** Nucleus counter according to Claim 1-4, characterised in that the humidification liquid is selected from the group of perfluoroalkanes or the higher alcohols.

**6.** Nucleus counter according to Claim 5, characterised in that the humidification liquid is n-butanol.

**7.** Nucleus counter according to Claim 6, characterised in that the humidification liquid can be supplemented through an external feed.

**8.** Nucleus counter according to Claim 1-7, characterised in that the geometric dimensions of the duct (2) of the humidification zone (1) are so selected that the dimensionless parameter A resulting from the equation $D{\times}T/a^2$, lies in the range of approximately 0.5-1.5, D being the diffusion coefficient of the operational vapour in the carrier gas, T the duration time of the aerosol volume in the humidifier, and $\underline{a}$ a typical dimension of the humidifier transversely to the flow direction, such for example as the tube radius in the case of a circular tube.

9. Nucleus counter according to Claim 1-8, characterised in that the parameter A preferably reaches the order of magnitude 1.

10. Nucleus counter according to Claim 9, characterised in that the diameter of the duct (2) of the humidification zone (1) is so designed that a volumetric flow of up to 6 litres per minute of test air can be accommodated.

11. Nucleus counter according to Claim 9, characterised in that the diameter of the duct (2) of the humidification zone (2) is so designed that preferably up to 3 litres per minute of test air can be accommodated.

12. Nucleus counter according to Claim 1-11, characterised in that the duct (6) of the condensation zone (5) comprises a tube (9), this tube (9), connected to a transitional region (14) originating from the connector piece (8) being tapered in the direction of a further transitional region (15).

13. Nucleus counter according to Claim 1 to 12, characterised in that the geometric dimensions of the duct (6) of the condensation zone (50 are so selected that the dimensionless parameter B resulting from the equation $KxT/a^2$, lies in the range of magnitude between 0.05 and 0.4, the symbol T having the same meaning as that given in Claim 8, and K being the temperature guide number of the carrier gas.

14. Nucleus counter according to Claim 1 to 13, characterised in that the optical detection system (10) is connected to the duct (6) of the condensation zone (5) by an adapter (11).

15. Nucleus counter according to one or more of Claims 1 to 14, characterised in that the hollow space (4) in the humidification zone (1) and the hollow space (7) in the condensation zone (5), of the nucleus counter unit are respectively surrounded by a single casing.

16. Nucleus counter according to Claim 15, characterised in that each individual measuring duct has its own optical detection system comprising light source and detector.

17. Nucleus counter according to Claim 16, characterised in that all the measuring ducts are connected to a single light source.

18. Nucleus counter according to Claim 15 to 17, characterised in that all the measuring ducts are connected to a single pump in order to control the volumetric flow.

19. Nucleus counter according to Claim 18, characterised in that the pump (20) is preceded by a critical nozzle (21).

20. Utilisation of the nucleus counter according to Claim 15-19, for locally-dissolved measurement of the penetration in filter bags, or for locally-dissolved measurement in clean-rooms.


**Revendications**

1. Compteur de noyaux de condensation comportant une zone d'humidification constituée par un canal, dans lequel circule l'échantillon d'air, et une zone de condensation, qui est disposée approximativement perpendiculairement à ce canal, ainsi qu'un système optique de détection, constitué par une source de lumière et un détecteur, et dans lequel il est prévu
que le canal (2) de la zone d'humidification (1), qui est constitué par un matériau transparent (3) possédant une perméabilité suffisante pour le liquide respectif d'humidification, est entouré par une cavité (4), qui sert à recevoir le liquide d'humidification,
que ce canal pénètre dans le liquide de fonctionnement, le liquide traversant sous l'action de forces capillaires le matériau poreux et assurant un entraînement permanent du liquide, mais que d'autre part le matériau poreux possède des pores si fins qu'en dépit de la surpression hydrostatique extérieure existante, il ne se produit pas un remplissage complet du canal d'humidification,
que la zone de condensation (5) est constituée par un canal (6) qui est entouré par une cavité (7) qui sert à loger un fluide de refroidissement, qui traverse, selon un circuit, la cavité (7) de la zone de condensation (5), la zone de condensation (5) étant reliée à la zone d'humidification (1) par l'intermédiaire d'un élément de liaison (8),

qu'aussi bien la cavité (4) de la zone d'humidification (1) que la cavité (5) de la zone de condensation (5) sont entourées par un boîtier (12,13), et

qu'au moins 2 canaux de mesure individuels, dont chacun possède un canal (2) de la zone d'humidification (1), qui est reliée au canal (6) de la zone de condensation (5) par l'intermédiaire d'éléments de liaison (8), sont disposés pour former une unité de comptage de noyaux.

2. Compteur de noyaux selon la revendication 1, caractérisé en ce que le canal (2) de la zone d'humidification (1) possède une section transversale annulaire.

3. Compteur de noyaux selon les revendications 1 et 2, caractérisé en ce que le matériau transparent (3) possède une structure poreuse telle qu'un matériau fritté et a une épaisseur de paroi de 3 à 15 mm.

4. Compteur de noyaux selon la revendication 3, caractérisé en ce que l'épaisseur de paroi du matériau fritté est comprise entre 3 et 8 mm.

5. Compteur de noyaux selon les revendications 1 à 4, caractérisé en ce que le liquide d'humidification est choisi dans le groupe des perfluoroalcanes ou des alcools supérieurs.

6. Compteur de noyaux selon la revendication 5, caractérisé en ce que le liquide d'humidification est du n-éthanol.

7. Compteur de noyaux selon les revendications 1 à 6, caractérisé en ce que le liquide d'humidification peut être complété par un apport extérieur.

8. Compteur de noyaux selon les revendications 1 à 7, caractérisé en ce que le dimensionnement géométrique du canal (2) de la zone d'humidification (1) est choisi de telle sorte que le paramètre sans dimension A, qui fournit conformément à la relation $\frac{D \times T}{a^2}$, est situé dans la gamme comprise entre environ 0,5 et 1,5, D étant le coefficient de diffusion de la vapeur de fonctionnement dans le gaz porteur, T le temps de séjour du volume d'aérosol dans l'humidificateur, et a une dimension typique de l'humidificateur transversalement par rapport à la direction d'écoulement, comme par exemple le rayon du tube dans un tube circulaire.

9. Compteur de noyaux selon les revendications 1 à 8, caractérisé en ce que le paramètre A possède de préférence l'ordre de grandeur 1.

10. Compteur de noyaux selon la revendication 9, caractérisé en ce que le diamètre du canal (2) de la zone d'humidification (1) est agencé de telle sorte qu'un courant volumique atteignant jusqu'à 6 l par minute de l'échantillon d'air peut être prélevé.

11. Compteur de noyaux selon la revendication 9, caractérisé en ce que le diamètre du canal (2) de la zone d'humidification (1) est choisi de telle sorte que l'on peut prélever de préférence jusqu'à 3 l par minute de l'échantillon d'air.

12. Compteur de noyaux selon les revendications 1 à 11, caractérisé en ce que le canal (6) de la zone de condensation (5) est constitué par un tube (9), le tube (9) possédant une forme rétrécie à la suite d'une zone de jonction (14) partant de l'élément de liaison (8), jusqu'à une autre zone de jonction (15).

13. Compteur de noyaux selon les revendications 1 à 12, caractérisé en ce que le dimensionnement géométrique du canal (6) de la zone de condensation (5) est choisi de telle sorte que le paramètre sans dimension B, qui est fourni par la relation $\frac{K \times D}{a^2}$, se situe dans une gamme de valeurs comprises entre 0,05 et 0,4, les symboles T et a ayant la même signification que dans la revendication 8, et K représentant le coefficient conductibilité thermique du gaz porteur.

14. Compteur de noyaux selon les revendications 1 à 13, caractérisé en ce que le système de détection optique (10) est relié au canal (6) de la zone de condensation (5) par un adaptateur (11).

15. Compteur de noyaux selon une ou plusieurs des revendications 1 à 14, caractérisé en ce que la cavité (4) des zones d'humidification (1) ainsi que la cavité (7) des zones de condensation (5) de l'unité du compteur de noyaux sont entourées respectivement par un boîtier unique.

16. Compteur de noyaux selon la revendication 15, caractérisé en ce que chaque canal individuel de mesure dispose d'un système optique particulier de détection constitué par une source de lumière et un détecteur.

17. Compteur de noyaux selon la revendication 15, caractérisé en ce que tous les canaux de mesure sont reliés à une seule source de lumière.

18. Compteur de noyaux selon les revendications 15 à 17, caractérisé en ce que tous les canaux de mesure sont reliés à une seule pompe (20) servant à commander le courant volumique.

19. Compteur de noyaux selon la revendication 18, caractérisé en ce qu'une buse critique (21) servant à stabiliser le courant volumique est branchée en amont de la pompe (20).

20. Utilisation du compteur de noyaux selon les revendications 15 à 19, pour la mesure à résolution locale de la pénétration au niveau de poches filtrantes ou pour la mesure à résolution locale dans des salles blanches.

Fig.: 1

Fig.: 2